# EUROPEAN PATENT APPLICATION

(11) **EP 4 685 449 A1**
(43) Date of publication of application: **28.01.2026**
(21) Application number: 24190441.6
(22) Date of filing: 23.07.2024
(51) Int. Cl.: G01M 5/00, F16L 11/15

(54) **MONITORING SYSTEM AND METHOD**

(71) Applicant: Nexans, 92400 Courbevoie (FR)
(72) Inventor: GÜNZEL, Gerald, 92400 COURBEVOIE (FR); COMBESSIS, Anthony, 92400 COURBEVOIE (FR); EGERER, Ralf, 92400 COURBEVOIE (FR)
(74) Representative: Cabinet Boettcher

(57) **Abstract**

A monitoring system (100) and a method for detecting bending and/or strain of a corrugated tube (101) are suggested. The system comprises at least two sensor chains (103) extending along a longitudinal direction of the corrugated tube at different circumferential positions. The sensor chains are configured to measure bending and/or strain exerted on the corrugated tube. The sensor chains are connected to a signal processing unit (102) that is configured to process output signals of the sensor chains for determining accumulated damages.

## Description

### Field

The present disclosure relates to a monitoring system and method for determining and tracking mechanical loads on corrugated flexible tubes.

### Background

Flexible metal hoses/corrugated tubes are used in many different applications including transfer lines implemented in transfer systems for fluids. Multi-walled transfer lines are employed for instance in transfer systems for temperature sensitive fluids. Over their service life, the corrugated tubes are bent at different points with different frequency and to different degrees, and sometimes the corrugated tube is also subjected to axial loads. The mechanical loads lead over time to wear and tear of the corrugated tubes, which finally can result in failure of the corrugated tube. Failure of a corrugated tube is highly undesirable not only for safety issues but also for risk of environmental hazards, and operational downtime to name only a few examples. The current approach to maintain safe operation of a transfer system with corrugated tubes is to simply replace the corrugated tubes after a certain period of time, regardless of how the corrugated tubes have been stressed up to that point.

On the one hand, this is wasteful because in most cases the load budget of the corrugated tubes has not been used up before the corrugated tubes is replaced at regular intervals. On the other hand, load peaks, e.g. due to improper handling, which could lead to premature failure, are not detected. Therefore, damages accumulated by the corrugated tube are an important factor for the operational lifetime of the corrugated tube.

Theories describing damage accumulation in constructive components, which are exposed to dynamic loads that can help to better use the load budget of a constructive component exist. One example can be found at Microsoft PowerPoint - 10 Schadensakkumulation.pptm (umwelt-campus.de).

In view of the limitations of existing monitoring systems and methods, there remains a desire for an improved monitoring systems and methods to overcome or at least improve one or more of the problems mentioned at the outset.

### Summary

According to a first aspect the present disclosure suggests a monitoring system for detecting bending and/or strain of a corrugated tube. The system comprises at least two sensor chains extending along a longitudinal direction of the corrugated tube at different circumferential positions. The sensor chains are configured to measure bending and/or strain exerted on the corrugated tube. The sensor chains are connected to a signal processing unit that is configured to process output signals of the sensor chains for determining accumulated damages.

The monitoring system according to the present disclosure enables a flexible replacement schedule adapted to the real accumulated damages on a corrugated tube being part for instance in a transfer system. The flexible replacement schedule supersedes a rigid replacement schedule according to which corrugated tubes, for instance integrated in a transfer system are replaced after expiration of a predetermined operational time. Conventionally, corrugated tubes have been replaced well before the real expiration of operational lifetime to be on the safe side and to avoid accidents. As a matter of fact, the real wear and tear of the corrugated tube depends on the actual mechanical loads and also on other conditions, such as the exposure to corrosive fluids, the corrugated tube is exposed to. When a rigid replacement schedule is applied, many times corrugated tubes have been replaced well before the accumulated damages have reached a level that requires replacement. Thus, the proposed monitoring system according to the present disclosure allows for transitioning to a flexible replacement schedule using the full capacity of the corrugated tube and therefore will save maintenance costs in many cases.

In an advantageous embodiment the signal processing unit comprises an interface for communicating the status of the monitored corrugated tube reflecting the accumulated damages.

The interface is suitable for informing service personnel of a current status of the corrugated tube and a potentially upcoming need for replacement.

With advantage the sensor chain is e.g. a strain gauge, an optical fiber or a sequence of discrete interconnected sensors.

In one embodiment only one type of chain sensors is used. However, in other embodiments different types of sensor chains may be used to adapt the monitoring system to special applications in which a single type of sensor is not adapted in the best way to this particular application.

In a further embodiment the sensor chain is configured to localize bending of the corrugated tube.

Localizing a position where the major portion of the accumulated damages is created may help the operator to adapt the system to more equal distribution of the loads on the corrugated tube. The operator may in this way achieve an extension of the useful lifetime of a corrugated tube.

Advantageously the sensor chains are configured to determine bending of the corrugated tube in two nonparallel planes.

The additional information about in which direction a bending occurs provides additional information for the operator that may help to improve a transfer system the monitored corrugated tube is part of.

In one embodiment the sensor chains can be arranged on the outside or on the inside of the corrugated tube.

The arrangement of the sensor chains can be chosen such that the sensor chain is protected against mechanical damages. For instance, if the corrugated tube is part of a double-walled transfer line, the sensor chain can be arranged on the outer surface of an inner tube and/or the inner surface of an outer tube.

Advantageously the signal processing unit stores sensor chain readings over time. In case of a failure of the corrugated tube, the recorded sensor readings permit to detect whether the corrugated tube has been used according to the respective technical specifications, for instance that no over bending has occurred. This feature is important regarding warranty obligations of the manufacturer of the corrugated tube.

According to a second aspect, the present disclosure suggests a method for scheduling replacement of corrugated tube comprising
- detecting bending and/or strain exerted on the corrugated tube;
- detecting and recording accumulated damages of the corrugated tube caused by the bending and/or strain exerted on the corrugated tube;
- issuing a warning message when the accumulated damages exceed a predetermined threshold.

The method permits to realize the same advantages that have already been described in connection with the monitoring system.

### Brief description of the drawings

Exemplary embodiments of the present disclosure are illustrated in the drawings and are explained in more detail in the following description. In the figures, the same or similar elements are referenced with the same or similar reference signs. It shows:
- Fig. 1: a schematic illustration of a first embodiment of the monitoring system according to the present disclosure;
- Fig. 2: a schematic illustration of a second embodiment of the monitoring system according to the present disclosure; and
- Figs. 3(a)-(c): cross sectional views of a corrugated tube.

### Detailed description

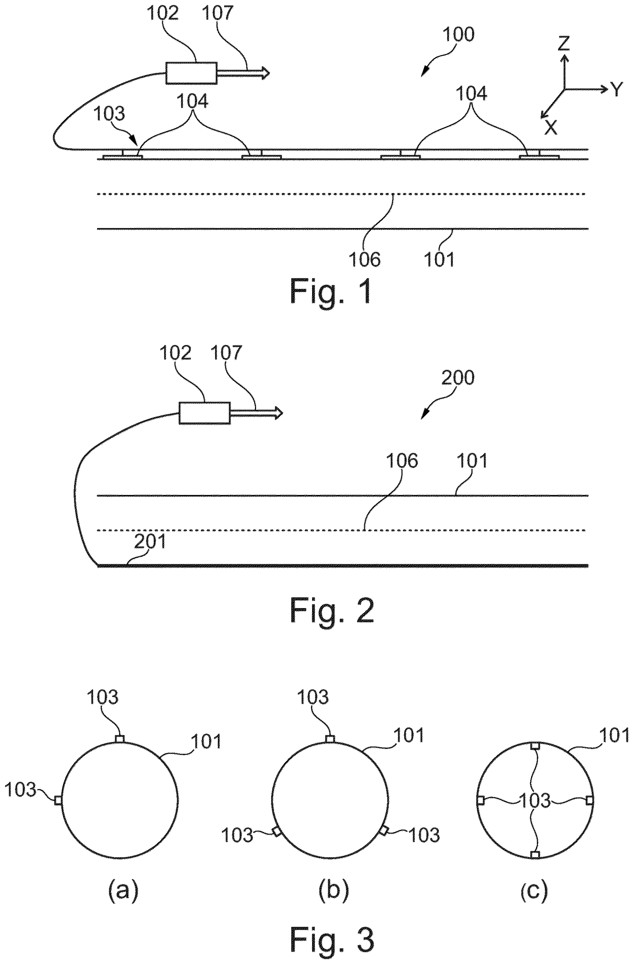

Figure 1 shows a schematic illustration of a first embodiment of the monitoring system 100 according to the present disclosure comprising a corrugated tube 101. The monitoring system is used to determine and track bending and longitudinal strain exerted on the corrugated tube. To this end, the monitoring system 100 comprises a signal processing unit connected with two sensor chains 103, wherein only one of the sensor chains 103 is visible in Figure 1. In the embodiment shown in Figure 1 the sensor chain 103 is composed of a sequence of discrete sensors 104 which are arranged on an outer surface of the corrugated tube 101 at predetermined distances from each other. It is noted that in Figure 1 the wall of the corrugated tube 101 is shown as a straight line for the sake of simplicity. The corrugated tube 101 can be used as a single walled tube but can be also an inner or outer tube of a multiwalled transfer line. In a typical application the corrugated tube 101 is part of a vacuum insulated multiwalled transfer line. The corrugated tube 101 can be bent in two different planes, which are not parallel to each other, and can be compressed or extended in a longitudinal direction. A Cartesian coordinate system inserted in Figure 1 visualizes an X- and a Z-axis as two bending axes, while a longitudinal compression or extension of the corrugated tube 101 may occur along the Y-axis. A longitudinal axis of the corrugated tube 101 is shown as dashed line 106.

Bending and longitudinal strain exerted on the corrugated tube are summarized by the term "mechanical loads". The mechanical loads on the corrugated tube 101 are detected by the sensor chains 103, which are connected with the signal processing unit 102. The signal processing unit 102 receives the output signals of the sensor chains 103 and dynamically determines the type and intensity of currently exerted mechanical loads. The processed data are recorded in a memory of the signal processing unit 102 to determine accumulated damages of the corrugated tube. When the accumulated damages exceed a predetermined threshold value, the signal processing unit 102 may output a warning message 107. The warning message 107 may be transferred via a communication network to a control room from where operations staff supervises a transfer system.

Figure 2 shows an alternative embodiment of a monitoring system 200 according to the present disclosure. The corrugated tube 101 of the monitoring system 200 is provided with an optical fiber 201 operating as longitudinal sensor chain 103 that extends the entire length of the corrugated tube 101. The optical fiber 201 is for instance provided with a Bragg grating (fiber Bragg grating, FBG), which reflects a predetermined wavelength of light. The reflected wavelength depends on external influences such as temperature, pressure or strain fluctuations on the FBG fiber.

When a broadband light beam is sent to an FBG, deliberate reflections of certain wavelengths of the coupled light occur at the points where the refractive index deviates from its nominal value. When an external mechanical load is applied to the FBG, the spectrum of the reflected wavelength range shifts, which means that the mechanical stresses on the fiber can be measured and interpreted.

The optical fiber 201 is connected with a signal processing unit 102 that analyzes the output signals of the optical fiber. The signal processing unit 101 ingests the output signals of the optical fiber 201, processes the data and records the data in the memory to determine accumulated damages of the corrugated tube 101. Like in the embodiment shown in Figure 1, the signal processing unit 102 outputs a warning message 107 when the accumulated damages exceed a predetermined threshold value. The warning message 107 is an indication the monitored corrugated tube 101 needs to be replaced.

Figures 3 (a) to (c) display a cross-section of a corrugated tube 101 to illustrate different positions of the sensor chains 103. In Figure 3(a) the monitoring system is provided with two sensor chains 103 that are arranged on the outside of corrugated tube 101. The corrugated tube 101 shown in Figure 3(b) is provided with three sensor chains 103 arranged at different circumferential positions on the outside of corrugated tube 101. Finally, in Figure 3(c) is provided with for sensor chains 103 that are arranged inside the corrugated tube 101.

In the claims, the word "comprising" does not exclude other elements or steps, and the indefinite article "a" does not exclude a plurality.

A single unit or device may perform the functions of multiple elements recited in the claims. The fact that individual functions and elements are recited in different dependent claims does not mean that a combination of those functions and elements could not advantageously be used.

### List of reference signs

- 100: monitoring system
- 101: corrugated tube
- 102: signal processing unit
- 103: sensor chain
- 104: discrete sensor
- 106: longitudinal axis
- 107: warning message

- 200: monitoring system
- 201: optical fiber

## Claims

1. Monitoring system for detecting bending and/or strain of a corrugated tube (101), wherein the system comprises at least two sensor chains (103) extending along a longitudinal direction of the corrugated tube (101) at different circumferential positions, wherein the sensor chains are configured to measure bending and/or strain exerted on the corrugated tube, wherein the sensor chains (103) are connected to a signal processing unit (102) that is configured to process output signals of the sensor chains (103) for determining accumulated damages.

2. Monitoring system according to claim 1, wherein the signal processing unit (102) comprises an interface for communicating the status of the monitored corrugated tube (101) reflecting the accumulated damages.

3. Monitoring system according to claim 1 or 2, wherein the sensor chain is a strain gauge, an optical fiber (201) or a sequence of discrete interconnected sensors (104).

4. Monitoring system according to one of the preceding claims, wherein the sensor chain (103) is configured to localize bending of the corrugated tube (101).

5. Monitoring system according to one of the preceding claims wherein the sensor chains (103) are configured to determine bending of the corrugated tube into nonparallel planes.

6. Monitoring system according to one of the preceding claims, wherein the sensor chains are arranged on the outside or inside of the corrugated tube.

7. Monitoring system according to one of the preceding claims, wherein the signal processing unit (102) stores sensor chain readings.

8. Method for scheduling replacement of corrugated tube comprising
- detecting bending and/or strain exerted on the corrugated tube (101);
- detecting and recording accumulated damages of the corrugated tube caused by the bending and/or strain exerted on the corrugated tube;
- issuing a warning message (107) when the accumulated damages exceed a predetermined threshold.
